# FASCICULE DE BREVET EUROPEEN

(11) **EP 1 111 750 B1**
(45) Date de publication et mention de la délivrance du brevet: **15.04.2009**
(21) Numéro de dépôt: 00410157.2
(22) Date de dépôt: 18.12.2000
(51) Int. Cl.: H02H 1/06, H02H 7/00, H01H 71/28

(54) **Dispositif de protection de défaut électrique**
Schutzvorrichtung gegen elektrische Fehler
Protective device for electrical faults

(30) Priorité: 22.12.1999 FR 9916209
(43) Date de publication de la demande: 27.06.2001
(73) Titulaire: Schneider Electric Industries SAS, 92500 Rueil-Malmaison (FR)
(72) Inventeur: Blanc, Patrick, 38050 Grenoble cedex 09 (FR); Fontana, Franck, 38050 Grenoble cedex 09 (FR); Lebeau, Bernard, 38050 Grenoble cedex 09 (FR); Tian, Simon, 38050 Grenoble cedex 09 (FR)
(74) Mandataire: Tripodi, Paul

(56) Documents cités:
- EP-A- 0 537 090
- US-A- 5 737 167

## Description

L'invention concerne un dispositif de protection de défaut électrique comportant:
- des moyens de mesure d'un courant de défaut,
- des moyens de traitement connectés aux moyens de mesure,
- un actionneur connecté aux moyens de traitement et à une ligne d'alimentation pour déclencher l'ouverture de contacts électriques, et
- des moyens de limitation de surtension connectés à l'actionneur.

Les dispositifs de protection connus comportent un actionneur pour déclencher l'ouverture de contacts électriques afin d'interrompre un courant électrique lorsqu'un défaut est détecté. Généralement, l'actionneur comporte un enroulement connecté entre une ligne d'alimentation et un noyau magnétique disposé dans l'axe dudit enroulement. Un circuit électronique de traitement commande l'actionneur en contrôlant la circulation d'un courant dans un enroulement. Ainsi, le noyau magnétique est déplacé lorsqu'un courant de commande circule dans l'enroulement.

Puisque l'enroulement est connecté à une ligne d'alimentation, son immunité aux perturbations électriques doit être très élevée. Les perturbations se manifestent notamment par des pics de surtensions temporaires. Il est connu d'utiliser des composants spécialisés pour la limitation de tensions. Ces composants sont essentiellement des varistances, des diodes écrêteuses ou des diodes à effet avalanche. Cependant, pour être vraiment efficaces ces composants nécessitent d'être associés à d'autres composants tels que des résistances en série ou d'autres limiteurs de courant. De telles associations de composants ne sont pas compatibles avec les volumes réduits généralement disponibles dans les dispositifs de protection électriques.

De plus, les actionneurs des dispositifs de protection sont destinés à fonctionner dans des plages de tensions très élevées. Des associations de composants risquent aussi de limiter cette plage de fonctionnement et de rendre le dispositif moins performant.

Dans les dispositifs de protection de l'état de la technique tel que divulgués par exemple dans le document US 5,737,167, des limiteurs de surtension peuvent être utilisés au plus près du circuit électronique de traitement en utilisant l'impédance de l'actionneur pour limiter la taille de leurs composants. Cependant, pendant une surtension, un courant de perturbation circulant dans l'enroulement peut provoquer le déplacement du noyau magnétique et la commande de l'ouverture des contacts.

L'invention a pour but un dispositif de protection de défaut électrique ayant une forte immunité aux perturbations électriques et un volume réduit.

Dans un dispositif selon l'invention, l'actionneur comporte :
- un premier enroulement connecté entre la ligne d'alimentation et une sortie commune connectée aux moyens de limitation de surtension, et
- un second enroulement connecté entre la sortie commune et les moyens de traitement.

Dans un mode de réalisation préférentiel, le premier enroulement est réalisé en deux parties séparées par un écran isolant.

Avantageusement, l'actionneur comporte un noyau magnétique mobile disposé essentiellement dans le premier enroulement lorsque l'actionneur est en position inactive.

De préférence, le premier et le second enroulement ont sensiblement le même nombre de spires.

De préférence, le premier et le second enroulement ont un nombre de spires égal ou inférieur à 700.

Dans un mode particulier de réalisation, les moyens de traitement comportent un composant qui passe en position ouverte lorsque le courant qui le traverse s'annule, et des moyens de déclenchement fournissant un signal de commande sans mémorisation après défaut pour déclencher la conduction dudit composant, l'actionneur étant connecté à une ligne d'alimentation alternative.

Avantageusement, l'actionneur peut être connecté indifféremment à une ligne d'alimentation en amont ou en aval des contacts électriques.

De préférence, l'unité de traitement comporte des moyens de déclenchement sur un courant de défaut différentiel.

Dans un mode de réalisation particulier, l'unité de traitement comporte des moyens de déclenchement en fonction de la tension de la ligne d'alimentation.

De préférence, les moyens de déclenchement en fonction de la tension de la ligne d'alimentation comportent un voyant mécanique commandé par un relais connecté à un enroulement de l'actionneur.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma d'un dispositif de protection de type connu ;
- la figure 2 représente un schéma d'un dispositif de protection selon un premier mode de réalisation de l'invention ;
- la figure 3 représente un schéma d'un dispositif de protection selon un second mode de réalisation de l'invention ;
- la figure 4 représente un schéma d'un actionneur pour un dispositif de protection selon un mode de réalisation de l'invention ;
- la figure 5 représente une vue en perspective d'un actionneur selon la figure 4;
- les figure 6 et 7 représentent des vues d'un support d'un actionneur selon la figure 4;
- la figure 8 représente un schéma d'un dispositif de protection selon un troisième mode réalisation de l'invention.

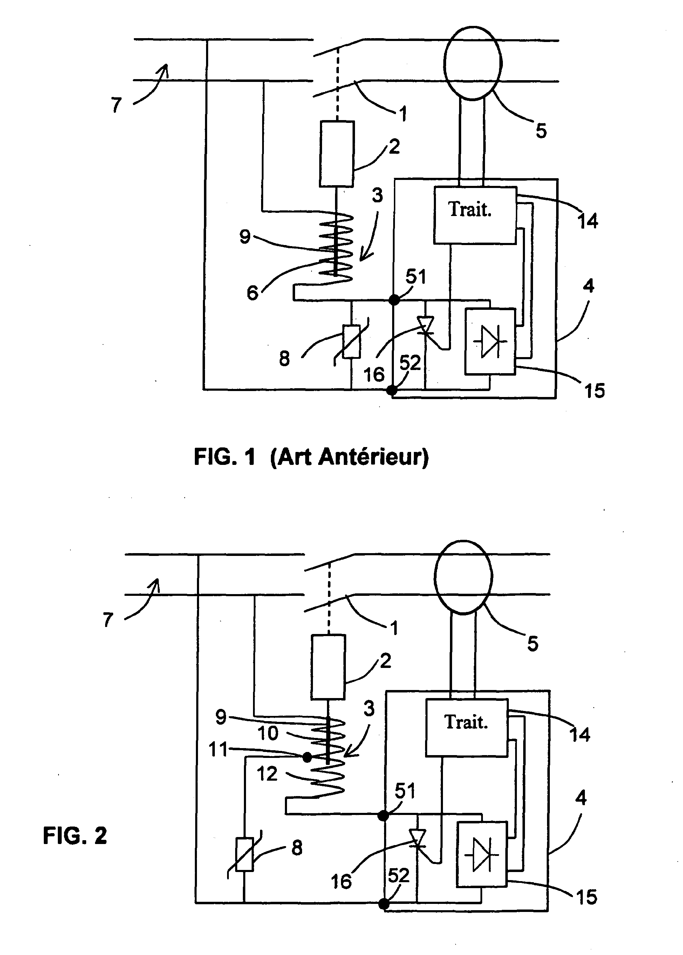

Le dispositif de protection connu représenté sur la figure 1 comporte des contacts 1 pour interrompre un courant électrique dans un réseau de distribution. Les contacts sont commandés par un mécanisme 2 pouvant être actionné par un actionneur 3. Une unité de traitement 4 reçoit un signal représentatif d'un courant électrique fourni par un capteur 5.

Sur ce schéma, le capteur 5 est un tore pour la mesure d'un courant différentiel. L'actionneur 3 comporte un enroulement 6 connecté entre un conducteur d'une ligne d'alimentation 7 et une première sortie 51 de l'unité de traitement 4. Un second conducteur de la ligne d'alimentation est connecté à une seconde sortie 52 de l'unité de traitement 4. Ainsi, l'unité de traitement 4 est alimentée par la ligne d'alimentation à travers l'enroulement de l'actionneur.

Lorsqu'un courant de défaut différentiel est détecté par le capteur 5, l'unité de traitement 4 commande la circulation d'un courant dans l'enroulement 6 de l'actionneur 3 qui déplace un noyau magnétique 9. Le noyau 9 commande le déclenchement du mécanisme 2 pour ouvrir les contacts 1.

Sur ce schéma, l'unité de traitement comporte un circuit électronique de traitement 14 qui traite le signal fourni par le capteur 5 et commande un thyristor 16 connecté entre la première et la seconde sorties 51 et 52 de l'unité de traitement. L'alimentation du circuit 14 est fournie par un circuit d'alimentation 15 ayant des entrées connectées aux sorties 51 et 52 de l'unité de traitement. Le circuit d'alimentation comporte généralement un dispositif abaisseur de tension et un circuit redresseur. Puisque le circuit d'alimentation est connecté en série avec l'actionneur, le courant absorbé par ledit circuit d'alimentation et très faible pour ne pas causer de déclenchement.

Pour éviter que les perturbations électriques sous la forme de surtensions perturbent le fonctionnement de l'unité de traitement, une varistance 8 est connectée entre la première et la seconde sortie dudit circuit 4. Cependant, avec ce schéma une perturbation peut faire circuler un courant suffisant pour déplacer le noyau et commander l'ouverture des contacts.

Dans un dispositif selon un mode de réalisation de l'invention, l'actionneur comporte deux enroulements connectés en série et comportant une sortie commune ou un enroulement avec un point milieu. La sortie commune ou le point milieu est connecté à des moyens de limitation de surtension.

Un dispositif selon un premier mode de réalisation de l'invention est représenté sur le schéma de la figure 2. Sur ce schéma l'actionneur comporte un premier enroulement 10 connecté entre un premier conducteur de la ligne 7 et une sortie commune 11, et un second enroulement 12 connecté entre ladite sortie commune 11 et une sortie 51 de l'unité de traitement 4. La varistance 8 est connectée entre la sortie commune 11 et un second conducteur de la ligne 7.

Dans ce mode de réalisation la varistance 8 peut être de faible dimension puisque l'impédance du premier enroulement limite le courant de perturbation. Ainsi, pour des perturbations transitoires, le premier enroulement et la varistance se trouvent en série, le premier enroulement limitant le courant dans la varistance et la varistance 8 limitant la tension appliquée en entrée de l'unité de traitement 4. Le courant circulant uniquement dans le premier enroulement n'induit pas de force électromagnétique suffisante pour déplacer le noyau de l'actionneur. Le second enroulement en série avec le premier permet d'induire une force suffisante pour commander le déplacement du noyau de l'actionneur lorsque l'unité de traitement permet le passage d'un courant de déclenchement dans les deux enroulements.

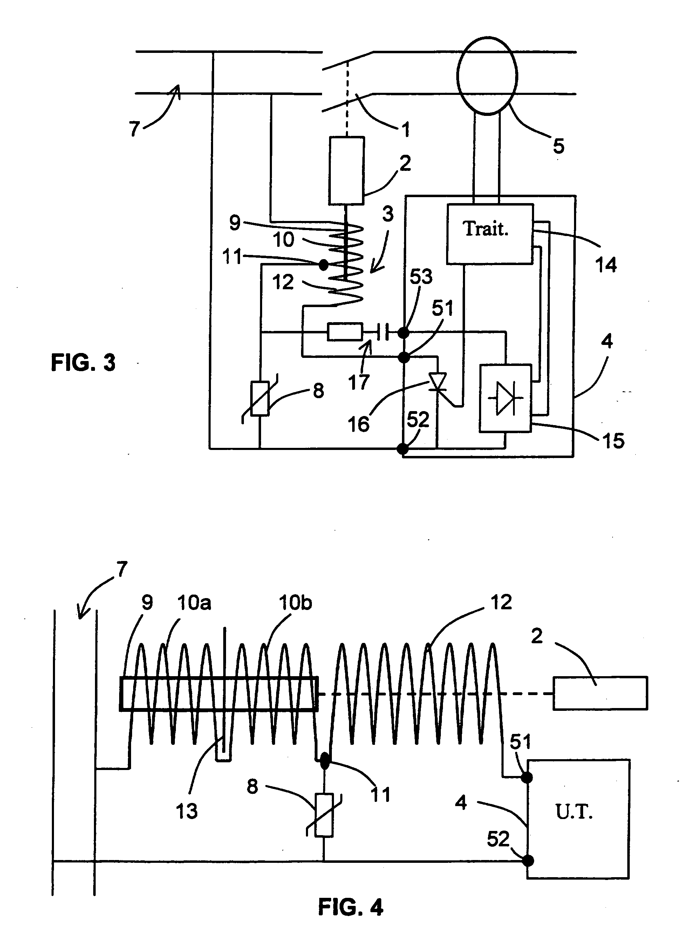

Un dispositif selon un second mode de réalisation de l'invention est représenté sur le schéma de la figure 3. Sur ce schéma, l'unité de traitement a la première sortie 51 qui relie le thyristor 16 au second enroulement 12 et comporte une troisième sortie 53 qui relie le circuit d'alimentation 15 à la varistance 8 et à la sortie commune 11 de l'actionneur. Une impédance 17 composée par un condensateur et une résistance produit une chute de tension entre la varistance et le circuit d'alimentation 15. Cette impédance 17 peut aussi être intégrée dans l'unité de traitement ou faire partie du circuit d'alimentation.

Un schéma détaillé de l'actionneur est représenté sur la figure 4. Sur ce schéma, le premier enroulement 10 est réalisé en deux parties 10a et 10b séparées par un écran isolant 13. Cette disposition permet d'éviter les amorçages électriques entre les spires de l'enroulement lorsque les perturbations présentent des surtensions très élevées, par exemple des tensions de plusieurs kilovolts.

De plus, lorsque les perturbations sont de forte puissance, le premier enroulement peut induire des perturbations électromagnétiques dans le second enroulement. Les tensions ainsi générées dans le second enroulement peuvent perturber l'unité de traitement 4. Pour éviter des inductions du premier enroulement sur le second enroulement, le noyau magnétique mobile de l'actionneur est disposé essentiellement dans le premier enroulement lorsque l'actionneur est en position inactive.

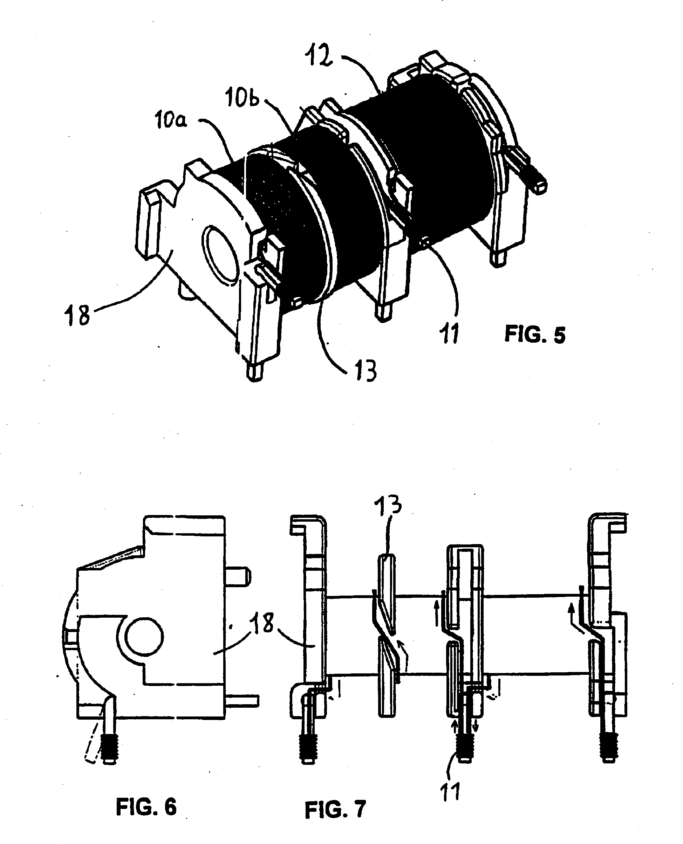

Une vue d'un actionneur selon la figure 4 est représentée sur la figure 5. Sur cette figure l'actionneur comporte un support 18. Des vues d'un support 18 d'un actionneur sont représentées sur les figures 6 et 7.

Pour optimiser la fabrication de l'actionneur, le premier et le second enroulements ont de préférence sensiblement le même nombre de spires. Avantageusement chaque enroulement a un nombre de spires égal ou inférieur à 700.

L'actionneur étant connecté à une ligne d'alimentation alternative, l'unité de traitement comporte avantageusement un composant de commande de l'actionneur qui passe en position ouverte lorsque le courant qui le traverse s'annule, et des moyens de déclenchement fournissant un signal de commande sans mémorisation après défaut pour déclencher la conduction dudit composant. De préférence ledit composant est un thyristor 16 qui laisse passer une alternance et se bloque dès que l'alternance change de signe. Ainsi dès qu'un défaut électrique disparaît après déclenchement, la conduction du composant de commande et par conséquent la circulation d'un courant dans l'actionneur ne dure pas plus d'une période suivante. Les moyens de déclenchement sans mémorisation sont par exemple des comparateurs intégrés dans le circuit de traitement 14.

Ainsi, l'actionneur peut être connecté à une ligne d'alimentation en amont des contacts électriques comme sur les figures 2 et 3 ou en aval des contacts électriques.

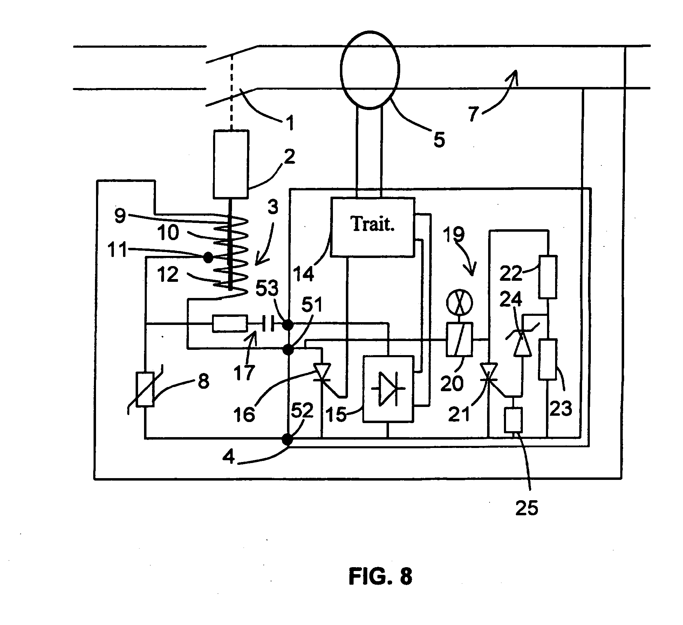

Dans un troisième mode de réalisation de l'invention représenté sur la figure 8, la ligne d'alimentation 7 est en aval des contacts 1 du même coté que le capteur 5. Dans ce mode de réalisation, l'unité de traitement 4 comporte un dispositif de déclenchement 19 sur dépassement de tension. Ce dispositif comporte un relais 20 du type bistable commandant un voyant mécanique. Ce relais est connecté en série avec un second thyristor de commande, l'ensemble relais 20 et thyristor 21 étant connecté entre les première et seconde sorties de l'unité de traitement, soit en parallèle sur le premier thyristor 16. Pour détecter un dépassement de tension, le thyristor 21 est commandé par un pont diviseur comportant des résistances 22 et 23 connectées entre l'anode et la cathode dudit thyristor, et par une diode 24 à seuil connectée entre le point commun du pont diviseur et la gâchette du thyristor. Un filtre 25 connecté à la gâchette du thyristor 21 permet de filtrer des perturbations de courte durée.

Dans ce mode de réalisation, le dispositif de déclenchement 19 est protégé par la varistance 8 est les enroulements 10 et 12 de l'actionneur 3.

Dans les dispositifs décrits ci-dessus, l'unité de traitement comporte des circuits pour déclencher en courant différentiel et/ou en dépassement de tension d'alimentation. Cependant d'autres fonctions de déclenchement ou de signalisation peuvent être concernées par l'invention, par exemple des déclenchements sur coupure de neutre ou des commandes externes d'ouverture ou d'autres fonctions qui agissent sur l'actionneur.

Les dispositifs de protection de défauts électriques selon des modes de réalisation de l'invention sont notamment des disjoncteurs différentiels, des interrupteurs différentiels, ou des relais comportant des actionneurs.

## Revendications

1. Dispositif de protection de défaut électrique comportant :
- des moyens de mesure (5) d'un courant de défaut,
- des moyens de traitement (4) connectés aux moyens de mesure,
- un actionneur (3) connecté aux moyens de traitement et à une ligne d'alimentation (7) pour déclencher l'ouverture de contacts (1) électriques, et
- des moyens (8) de limitation de surtension connectés à l'actionneur, dispositif **caractérisé en ce que** l'actionneur comporte :
- un premier enroulement (10, 10a, 10b) connecté entre la ligne d'alimentation et une sortie commune (11) connectée aux moyens (8) de limitation de surtension, et
- un second enroulement (12) connecté entre la sortie commune (11) et les moyens de traitement (4).

2. Dispositif selon la revendication 1 **caractérisé en ce que** le premier enroulement (10) est réalisé en deux parties (10a, 10b) séparées par un écran isolant (13).

3. Dispositif selon l'une des revendications 1 ou 2 **caractérisé en ce que** l'actionneur comporte un noyau magnétique mobile (9) disposé essentiellement dans le premier enroulement (10, 10a, 10b) lorsque l'actionneur est en position inactive.

4. Dispositif selon l'une quelconque des revendications 1 à 3 **caractérisé en ce que** le premier (10) et le second (12) enroulement ont sensiblement le même nombre de spires.

5. Dispositif selon l'une quelconque des revendications 1 à 4 **caractérisé en ce que** le premier et le second enroulement ont un nombre de spires égal ou inférieur à 700.

6. Dispositif selon l'une quelconque des revendications 1 à 5 **caractérisé en ce que** les moyens de traitement (4) comportent un composant (16) qui passe en position ouverte lorsque le courant qui le traverse s'annule, et des moyens de déclenchement (14) fournissant un signal de commande sans mémorisation après défaut pour déclencher la conduction dudit composant, l'actionneur étant connecté à une ligne d'alimentation (7) alternative.

7. Dispositif selon la revendication 6 **caractérisé en ce que** l'actionneur (3) peut être connecté indifféremment à une ligne d'alimentation (7) en amont ou en aval des contacts électriques (1).

8. Dispositif selon l'une quelconque des revendications 1 à 7 **caractérisé en ce que** l'unité de traitement comporte des moyens de déclenchement (14, 5, 16) sur un courant de défaut différentiel.

9. Dispositif selon l'une quelconque des revendications 1 à 8 **caractérisé en ce que** l'unité de traitement comporte des moyens de déclenchement (19, 20-25) en fonction de la tension de la ligne d'alimentation (7).

10. Dispositif selon la revendication 9 **caractérisé en ce que** les moyens de déclenchement (19) en fonction de la tension de la ligne d'alimentation comportent un voyant mécanique commandé par un relais (20) connecté à un enroulement de l'actionneur.

## Claims

1. A device for protection against electrical faults comprising:
- measuring means (5) for measuring a fault current,
- processing means (4) connected to the measuring means,
- an actuator (3) connected to the processing means and to a power supply line (7) to bring about opening of electrical contacts (1), and
- means (8) for limiting voltage surges connected to the actuator,
a device **characterized in that** the actuator comprises:
- a first winding (10, 10a, 10b) connected between the power supply line and a common output (11) connected to the means (8) for limiting voltage surges, and
- a second winding (12) connected between the common output (11) and the processing means (4).

2. The device according to claim 1 **characterized in that** the first winding (10) is achieved in two parts (10a, 10b) separated by an insulating shield (13).

3. The device according to one of the claims 1 or 2 **characterized in that** the actuator comprises a mobile magnetic core (9) arranged essentially in the first winding (10, 10a, 10b) when the actuator is in the inactive position.

4. The device according to any one of the claims 1 to 3 **characterized in that** the first (10) and second (12) winding have appreciably the same number of turns.

5. The device according to any one of the claims 1 to 4 **characterized in that** the first and second winding have a number of turns equal to or less than 700.

6. The device according to any one of the claims 1 to 5 **characterized in that** the processing means (4) comprise a component (16) which switches to the open position when the current flowing through this component is nil, and triggering means (14) supplying a control signal without storage after a fault to trigger turn-on of said component, the actuator being connected to an AC power supply line (7).

7. The device according to claim 6 **characterized in that** the actuator (3) can be connected to a power supply line (7) either up-line or down-line from the electrical contacts (1).

8. The device according to any one of the claims 1 to 7 **characterized in that** the processing unit comprises means (14, 5, 16) for tripping on a differential fault current.

9. The device according to any one of the claims 1 to 8 **characterized in that** the processing unit comprises means (19, 20-25) for tripping according to the voltage of the power supply line (7).

10. The device according to claim 9 **characterized in that** the means (19) for tripping according to the voltage of the power supply line comprise a mechanical indicator controlled by a relay (20) connected to a winding of the actuator.

## Patentansprüche

1. Einrichtung zum Schutz gegen elektrische Fehler, die
- Messmittel (5) zur Messung eines Fehlerstroms,
- an die Messmittel (5) angeschlossene Verarbeitungsmittel (4),
- ein an die Verarbeitungsmittel sowie an eine Stromversorgungsleitung (7) angeschlossenes Betätigungsorgan (3) zur Steuerung der Abschaltung elektrischer Kontakte (1) sowie
- an das Betätigungsorgan angeschlossene Begrenzungsmittel (8) zur Begrenzung von Überspannungen umfasst,
**dadurch gekennzeichnet, dass** das Betätigungsorgan
- eine erste Wicklung (10, 10a, 10b), die zwischen die Stromversorgungsleitung und einen, mit den Überspannungs-Begrenzungsmitteln (8) verbundenen gemeinsamen Ausgang geschaltet ist, sowie
- eine zweite Wicklung (12) umfasst, die zwischen den gemeinsamen Ausgang (11) und die Verarbeitungsmittel (4) geschaltet ist.

2. Einrichtung nach Anspruch 1, **dadurch gekennzeichnet, dass** die erste Wicklung (10) aus zwei Teilen (10a, 10b) besteht, zwischen denen eine Isolierstoff-Trennwand (13) angeordnet ist.

3. Einrichtung nach einem der Ansprüche 1 oder 2, **dadurch gekennzeichnet, dass** das Betätigungsorgan einen beweglichen Kern (9) umfasst, der im Wesentlichen in der ersten Wicklung (10, 10a, 10b) angeordnet ist, wenn sich das Betätigungsorgan in der Ruhestellung befindet.

4. Einrichtung nach irgendeinem der Ansprüche 1 bis 3, **dadurch gekennzeichnet, dass** die erste Wicklung (10) und die zweite Wicklung (12) annähernd die gleiche Windungszahl aufweisen.

5. Einrichtung nach irgendeinem der Ansprüche 1 bis 4, **dadurch gekennzeichnet, dass** die erste und die zweite Wicklung eine Windungszahl von kleiner oder gleich 700 aufweisen.

6. Einrichtung nach irgendeinem der Ansprüche 1 bis 5, **dadurch gekennzeichnet, dass** die Verarbeitungsmittel (4) ein Schaltglied (16), das in die Ausschaltstellung wechselt, wenn der über das Schaltglied fließende Strom zu null wird, sowie Auslösemittel (14) umfassen, die nach Auftreten eines Fehlers ein Steuersignal ohne Speicherung aussenden, um das genannte Schaltorgan in den leitenden Zustand umzuschalten, wobei das Betätigungsorgan an eine Wechselstrom-Versorgungsleitung (7) angeschlossen ist.

7. Einrichtung nach Anspruch 6, **dadurch gekennzeichnet, dass** das Betätigungsorgan (3) wahlweise auf der Einspeiseseite oder der Abgangsseite der elektrischen Kontakte (1) an eine Stromversorgungsleitung (7) angeschlossen werden kann.

8. Anordnung nach irgendeinem der Ansprüche 1 bis 7, **dadurch gekennzeichnet, dass** die Verarbeitungseinheit Auslösemittel (14, 5, 16) umfasst, die bei Auftreten eines Differenzstromfehlers ansprechen.

9. Anordnung nach irgendeinem der Ansprüche 1 bis 8, **dadurch gekennzeichnet, dass** die Verarbeitungseinheit Auslösemittel (19, 20-25) umfasst, die in Abhängigkeit von der Spannung in der Stromversorgungsleitung (7) ansprechen.

10. Anordnung nach Anspruch 9, **dadurch gekennzeichnet, dass** die in Abhängigkeit von der Spannung in der Stromversorgungsleitung ansprechenden Auslösemittel (19) eine mechanische Anzeige umfassen, die über ein, mit einer Wicklung des Betätigungsorgans verbundenes Relais (20) angesteuert wird.
